# EUROPEAN PATENT APPLICATION

(11) **EP 4 737 190 A1**
(43) Date of publication of application: **06.05.2026**
(21) Application number: 23942921.0
(22) Date of filing: 29.06.2023
(51) Int. Cl.: B60L 15/20, B60W 10/08

(54) **VEHICLE AND CONTROL METHOD THEREFOR, AND COMPUTER-READABLE STORAGE MEDIUM**

(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: SHEN, Keqing, Hangzhou Bay New Zone, Ningbo, Zhejiang 315336 (CN); CHEN, Dong, Hangzhou Bay New Zone, Ningbo, Zhejiang 315336 (CN); ZHU, Kunlun, Hangzhou Bay New Zone, Ningbo, Zhejiang 315336 (CN); MA, Yingguo, Hangzhou Bay New Zone, Ningbo, Zhejiang 315336 (CN); CHEN, Qimiao, Hangzhou Bay New Zone, Ningbo, Zhejiang 315336 (CN)
(74) Representative: Boult Wade Tennant LLP
(86) International application number: PCT/CN2023/104310
(87) International publication number: WO 2025/000413

(57) **Abstract**

A vehicle and a control method thereof, including: obtaining (S101) operation information of a vehicle in a two-wheel drive state; when it is determined that the vehicle has a need to switch to a four-wheel drive state according to the operation information, controlling (S102) a rotational speed of a target motor to reach a target rotational speed, where the target motor is a motor that has not been started in the vehicle in the two-wheel drive state; controlling (S103) the target motor to combine with a disengagement and combination apparatus (3) in the vehicle; and loading (S104) a combined torque that matches acceleration information of the vehicle to the target motor during a process of combining the target motor with the disengagement and combination apparatus (3), which reduce a rotational speed different between the target motor and the disengagement and combination apparatus (3), thereby reducing a noise generated when the vehicle enters a four-wheel drive.

## Description

### TECHNICAL FIELD

The present application relates to a field of vehicle control technologies and, in particular, to a vehicle and a control method thereof, and a computer-readable storage medium.

### BACKGROUND

With the improvement of people's lives, vehicles have become a commonly used tool for riding instead of walk in their daily lives.

The vehicle is provided with driving modes of two-wheel drive and four-wheel drive. The two-wheel drive refers to driving a vehicle with two wheels, while the four-wheel drive refers to driving a vehicle with four wheels. When the vehicle has a power demand (such as high throttle) or a four-wheel drive demand (such as skidding, unpaved roads), the vehicle will switch from two-wheel drive to four-wheel drive. Through combining a motor with a disengagement and combination apparatus, the vehicle connects the motor to a drive shaft, so as to connect the motor to a wheel connected to the drive shaft.

The gear of the motor engages with the gear of the disengagement and combination apparatus, which can achieve the combination of the motor with the disengagement and combination apparatus. However, due to a certain acceleration of the vehicle itself, the undriven wheel also has a certain acceleration. As the disengagement and combination apparatus is connected to the undriven wheel through the drive shaft, the gear of the disengagement and combination apparatus itself has a certain acceleration. When the gear of the motor engages with the gear of the disengagement and combination apparatus, because the gear of the disengagement and combination apparatus has acceleration, there is a certain rotational speed difference between the gear of the motor and the gear of the disengagement and combination apparatus, resulting in collision between the gear of the motor and the gear of the disengagement and combination apparatus, causing damage to the vehicle and generating significant noise.

### SUMMARY

The present application provides a vehicle and a control method thereof, and a computer-readable storage medium, to solve the problem that significant noise is generated during a process of a vehicle switching from a two-wheel drive to a four-wheel drive.

**In** one aspect, the present application provides a vehicle control method, including:
obtaining operation information of a vehicle in a two-wheel drive state;
when it is determined that the vehicle has a need to switch to a four-wheel drive state according to the operation information, controlling a rotational speed of a target motor to reach a target rotational speed, where the target motor is a motor that has not been started in the vehicle in the two-wheel drive state;
controlling the target motor to combine with a disengagement and combination apparatus in the vehicle; and
loading a combined torque that matches acceleration information of the vehicle to the target motor during a process of combining the target motor with the disengagement and combination apparatus.

In one possible design, after the step of loading the combined torque that matches the acceleration information of the vehicle to the target motor during the process of combining the target motor with the disengagement and combination apparatus, the method further includes:
determining a target torque of the target motor in the four-wheel drive state after a combination of the target motor with the disengagement and combination apparatus has completed; and
loading a torque of the target motor to the target torque.

In one possible design, before the step of determining the target torque of the target motor in the four-wheel drive state, the method further includes:
stopping loading the combined torque to the target motor, and determining a target duration according to the combined torque and a corresponding torque attenuation rate, where the target duration is used to indicate a duration for which the combined torque attenuates to 0; and
loading an allocation torque to the target motor within the target duration.

In one possible design, the method further includes:
during a process of loading the torque of the target motor to the target torque, controlling a torque of a power source of the vehicle, so that a sum of the torque of the target motor and the torque of the power source is equal to a total torque required for the vehicle to travel.

In one possible design, the step of loading the combined torque that matches the acceleration information of the vehicle to the target motor during the process of combining the target motor with the disengagement and combination apparatus includes:
obtaining a driving acceleration of the vehicle or a rotational speed acceleration of a power source of the vehicle during the process of combining the target motor with the disengagement and combination apparatus, where the acceleration information includes the driving acceleration or the rotational speed acceleration; and
determining the combined torque according to the driving acceleration or the rotational speed acceleration, and loading the combined torque to the target motor.

In one possible design, the step of loading the combined torque that matches the acceleration information of the vehicle to the target motor during the process of combining the target motor with the disengagement and combination apparatus includes:
obtaining a braking torque of the vehicle, a torque of a power source of the vehicle and a slope of a road where the vehicle is located during the process of combining the target motor with the disengagement and combination apparatus, where the acceleration information includes the braking torque, the torque of the power source and the slope; and
determining the combined torque according to the braking torque, the torque of the power source and the slope, and loading the combined torque to the target motor.

In one possible design, the step of loading the combined torque that matches the acceleration information of the vehicle to the target motor during the process of combining the target motor with the disengagement and combination apparatus includes:
obtaining a first opening degree of an accelerator pedal of the vehicle, a second opening degree of a brake pedal of the vehicle and a slope of a road where the vehicle is located during the process of combining the target motor with the disengagement and combination apparatus, where the acceleration information includes the first opening degree, the second opening degree and the slope; and
determining the combined torque according to the first opening degree, the second opening degree and the slope, and loading the combined torque to the target motor.

In another aspect, the present application provides a vehicle, including:
an obtaining module, configured to obtain operation information of a vehicle in a two-wheel drive state;
a first control module, configured to, when it is determined that the vehicle has a need to switch to a four-wheel drive state according to the operation information, control a rotational speed of a target motor to reach a target rotational speed, where the target motor is a motor that has not been started in the vehicle in the two-wheel drive state;
a second control module, configured to control the target motor to combine with a disengagement and combination apparatus in the vehicle; and
a loading module, configured to load a combined torque that matches acceleration information of the vehicle to the target motor during a process of combining the target motor with the disengagement and combination apparatus.

In another aspect, the present application provides a vehicle, including:
an obtaining module, configured to obtain operation information of a vehicle in a two-wheel drive state;
a first control module, configured to, when it is determined that the vehicle has a need to switch to a four-wheel drive state according to the operation information, control a rotational speed of a target motor to reach a target rotational speed, where the target motor is a motor that has not been started in the vehicle in the two-wheel drive state;
a second control module, configured to control the target motor to combine with a disengagement and combination apparatus in the vehicle, where the combination of the target motor with the disengagement and combination apparatus is used for the vehicle to enter the four-wheel drive state; and
a loading module, configured to load a combined torque that matches acceleration information of the vehicle to the target motor during a process of combining the target motor with the disengagement and combination apparatus.

On another hand, the present application further provides a vehicle, including: a processor, and a memory connected in communication with the processor;
where the memory stores computer execution instructions;
the processor executes the computer execution instructions stored in the memory to implement the method as described above.

On another hand, the present application further provides a computer-readable storage medium, where the computer-readable storage medium stores computer execution instructions, which, when executed by a processor, are used to implement the method as described above.

In the vehicle and the control method thereof, and the computer-readable storage medium provided in the present application, operation information of a vehicle in a two-wheel drive state is obtained; when it is determined that the vehicle has a need to switch to a four-wheel drive state according to the operation information, a rotational speed of a target motor is controlled to reach a target rotational speed; the target motor is controlled to combine with a disengagement and combination apparatus in the vehicle; and a combined torque that matches acceleration information of the vehicle is loaded to the target motor during a process of combining the target motor with the disengagement and combination apparatus. In the present application, during the process of combining the motor with the disengagement and combination apparatus, the combined torque that matches the acceleration information of the vehicle is loaded to the motor, so that the gear of the motor has a speed that matches the vehicle speed, which reduces a speed difference between the gear of the disengagement and combination apparatus and the gear of the motor, thereby reducing a collision force generated when the gear of the target motor engages with the gear of the disengagement and combination apparatus, and reducing a noise generated when the vehicle enters a four-wheel drive.

### BRIEF DESCRIPTION OF DRAWINGS

FIG. 1 is a schematic flowchart of a first embodiment of a vehicle control method provided in the present application.
FIG. 2 is a schematic structural diagram of a vehicle involved in the present application.
FIG. 3 is a schematic structural diagram of a first motor assembly of a vehicle involved in the present application.
FIG. 4 is a schematic structural diagram of a disengagement and combination apparatus involved in the present application.
FIG. 5 is a schematic flowchart of a second embodiment of a vehicle control method provided in the present application.
FIG. 6 is a schematic flowchart of a third embodiment of a vehicle control method provided in the present application.
FIG. 7 is a schematic flowchart of a fourth embodiment of a vehicle control method provided in the present application.
FIG. 8 is a schematic flowchart of a fifth embodiment of a vehicle control method provided in the present application.
FIG. 9 is a schematic flowchart of a sixth embodiment of a vehicle control method provided in the present application.
FIG. 10 is a schematic state diagram of a vehicle switching to four-wheel drive control in the present application.
FIG. 11 is a schematic diagram of modules of a vehicle in the present application.
FIG. 12 is a schematic diagram of a hardware structure of a vehicle in the present application.

### DESCRIPTION OF EMBODIMENTS

Illustrative embodiments will be described in detail herein, examples thereof are shown in the accompanying drawings. When the following description involves accompanying drawings, unless otherwise indicated, the same numbers in different accompanying drawings represent the same or similar elements. Implementations described in the following illustrative embodiments do not represent all embodiments consistent with the present application. On the contrary, they are only examples of apparatuses and methods consistent with some aspects of the present application as described in the accompanying claims.

With the improvement of people's lives, vehicles have become a commonly used tool for riding instead of walk in their daily lives.

The vehicle is provided with driving modes of two-wheel drive and four-wheel drive. The two-wheel drive refers to driving a vehicle with two wheels, while the four-wheel drive refers to driving a vehicle with four wheels. When the vehicle has a power demand (such as high throttle) or a four-wheel drive demand (such as skidding, unpaved roads), the vehicle will switch from two-wheel drive to four-wheel drive. Through combining a motor with a disengagement and combination apparatus, the vehicle connects the motor to a drive shaft, so as to connect the motor to a wheel connected to the drive shaft.

The inventor of the present application has found that the gear of the motor engages with the gear of the disengagement and combination apparatus, which can achieve the combination of the motor with the disengagement and combination apparatus. However, due to a certain acceleration of the vehicle itself, the undriven wheel also has a certain acceleration. As the disengagement and combination apparatus is connected to the undriven wheel through the drive shaft, the gear of the disengagement and combination apparatus itself has a certain acceleration. When the gear of the motor engages with the gear of the disengagement and combination apparatus, because the gear of the disengagement and combination apparatus has acceleration, there is a certain rotational speed difference between the gear of the motor and the gear of the disengagement and combination apparatus, resulting in collision between the gear of the motor and the gear of the disengagement and combination apparatus, causing damage to the vehicle and generating significant noise.

The inventor of the present application thus thought that, during the process of combining the motor with the disengagement and combination apparatus, the combined torque that matches the acceleration information of the vehicle is loaded to the motor, so that the gear of the motor has a speed that matches the vehicle speed, which reduces a speed difference between the gear of the disengagement and combination apparatus and the gear of the motor, thereby reducing a collision force generated when the gear of the target motor engages with the gear of the disengagement and combination apparatus, and reducing a noise generated when the vehicle enters a four-wheel drive.

The following describes the application scenarios of the vehicle control method of the present application. In an application scenario, when a vehicle is in a two-wheel drive state, if it detects that an accelerator is deeply pressed, the vehicle has a need to switch to four-wheel drive. In another application scenario, when the vehicle detects an operation of switching to four-wheel drive mode, it has a need to switch to four-wheel drive. In another application scenario, when the vehicle detects wheel lock, slip, drive shaft failure, wheel failure, reduced road adhesion coefficient, and recognition of road bumps by the vehicle, it can be determined that the vehicle has a need to switch to four-wheel drive.

The following provides a detailed description on the technical solution of the present application and how the technical solution of the present application solves the above technical problems through specific embodiments. The following specific embodiments can be combined with each other, and the same or similar concepts or processes may not be repeated in some embodiments. Below, the embodiments of the present application will be described in conjunction with the accompanying drawings.

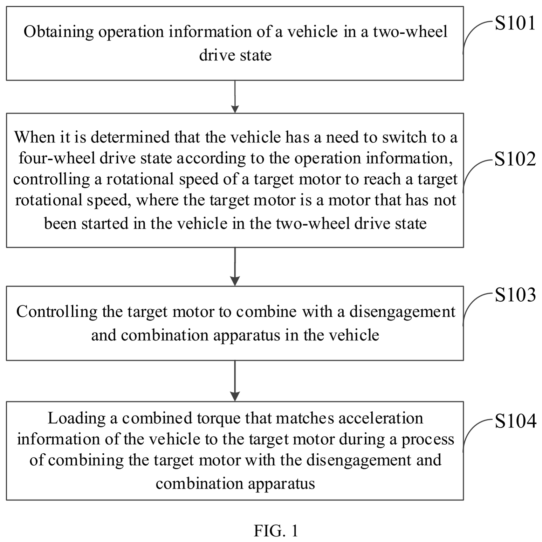

Referring to FIG. 1, FIG. 1 is a schematic flowchart of a first embodiment of a vehicle control method provided in the present application, the vehicle control method includes the following steps.

Step S101, obtaining operation information of a vehicle in a two-wheel drive state.

In this embodiment, the executive subject may be a vehicle or a control apparatus of the vehicle, and the control apparatus is used to control the vehicle.

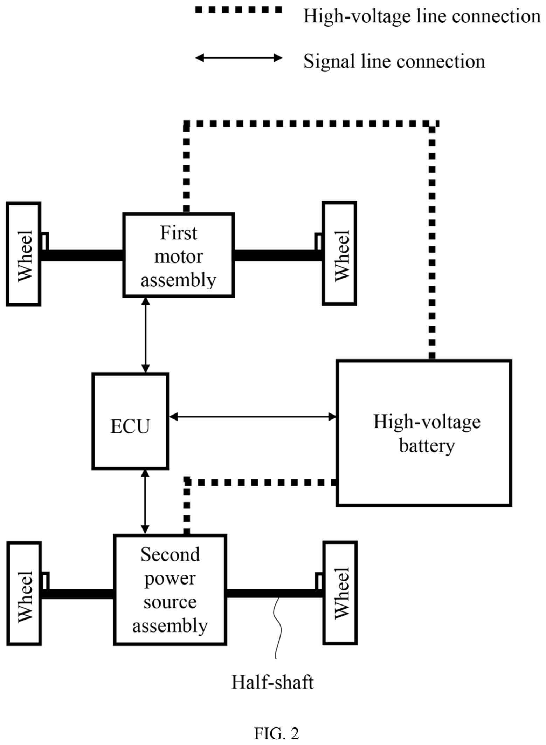

Exemplarily, referring to FIG. 2, the vehicle includes a first motor assembly, a second power source assembly, a wheel, a half-shaft, a high-voltage battery, and a control apparatus. The first motor assembly and the second power source assembly are connected to the high-voltage battery through a high-voltage line. The control apparatus can be a CPU (Central Processing Unit), and the control apparatus is connected to a high-voltage battery through a signal line. The first motor assembly is connected to the wheel through the half-shaft, the second power source assembly is connected to the wheel through the half-shaft, and both the first motor assembly and the second power source assembly are signal-connected to the control device. The first motor assembly includes a motor and a disengagement and combination apparatus. The second power source assembly includes a power source, and the power source can be a motor or a fuel engine. The first motor assembly can be connected to the second power source assembly through a shaft or gear, and the second power source assembly drives the wheel connected to the first motor assembly. In addition, the disengagement and combination apparatus can also be assembled into the second power source assembly.

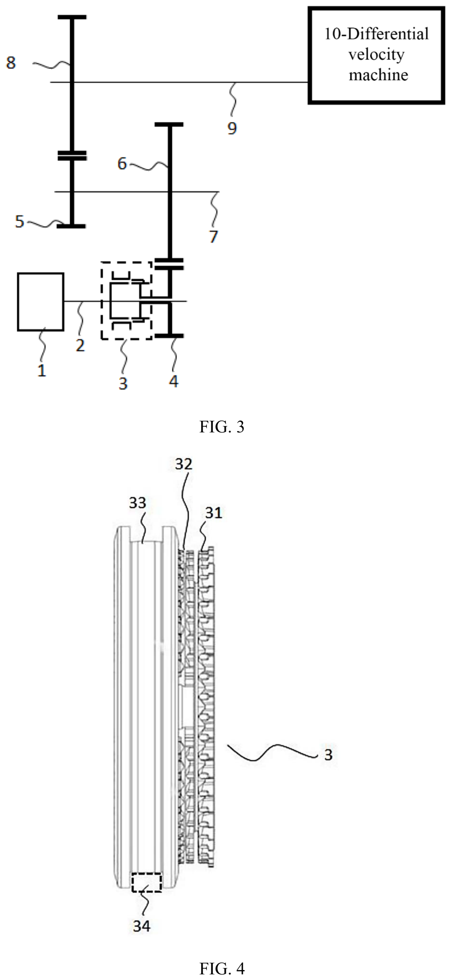

Furthermore, referring to FIG. 3, the first motor assembly includes a motor 1, a motor output shaft (first shaft) 2, a disengagement and combination apparatus 3, a first gear 4, a second gear 4, a third gear 6, a second shaft 7, a fourth gear 8, a third shaft 9, and a differential velocity machine 10. The disengagement and combination apparatus 3 transmits a torque and interrupts transmission of the torque through disconnecting or connecting a mechanical structure between the motor 1 and the differential velocity machine. The disengagement and combination apparatus 3 can be disposed on the motor output shaft 2, the second shaft 7, or the third shaft 9. Preferably, the disengagement and combination apparatus 3 is disposed on the motor output shaft 2 or the second shaft 7.

Further referring to FIG. 4, the disengagement and combination apparatus 3 includes a combination gear (passive gear) 31, a gear hub (active gear) 32, a gear sleeve 33, and a shifter fork groove 34. The shift fork pushes the gear sleeve 33 in a direction or an opposite direction of the combination gear (passive gear) 31 through the shifter fork groove 34 to achieve combination or disengagement, and the gear hub (active gear) 32 is located on the gear sleeve 33. When combined, the gear hub (active gear) 32 engages with the combination gear (passive gear) 31 to achieve mechanical connection between the motor 1 with the first shaft 2 and the second shaft 7; when disengaged, the gear hub (active gear) 32 disengages from the combination gear (passive gear) 31.

For ease of description, the following will explain this embodiment with the vehicle as the executive subject.

When the vehicle is in a two-wheel drive state, the motor does not start, and the vehicle will obtain real-time operation information in the two-wheel drive state. The operation information includes a vehicle speed, an acceleration of the vehicle, a motor rotational speed, a shaft speed, a wheel speed, a motor torque, a driving mode (such as two-wheel drive, four-wheel drive), a position of an accelerator pedal, a position of a brake pedal, a braking force, a feedback torque, a state of the brake pedal, a slope, a driving mode setting state, a maximum/minimum driving torque, a torque distribution state, an available battery discharge power, an available battery charging power, an anti-slip/anti-lock module operating state, an anti-slip/anti-lock module torque request, a road surface state, and other information.

The vehicle speed, the vehicle acceleration, the slope and other information can be measured by the vehicle's own sensor or obtained by an measurement equipment outside the vehicle. The vehicle acceleration can also be obtained through calculating the vehicle speed; the motor torque can be an actual torque generated by the motor or a torque that needs to be generated by the motor; the braking force refers to a braking force of a vehicle provided by a mechanical braking apparatus through friction; the feedback torque refers to a torque at which the motor brakes.

Step S102, when it is determined that the vehicle has a need to switch to a four-wheel drive state according to the operation information, controlling a rotational speed of a target motor to reach a target rotational speed, where the target motor is a motor that has not been started in the vehicle in the two-wheel drive state.

After the vehicle obtains the operation information, it determines whether the vehicle has a need to switch to the four-wheel drive state according to the operation information.

In one example, the vehicle obtains the position of the accelerator pedal from the operation information, and an opening degree of the accelerator pedal can be determined through the position of the accelerator pedal, when the opening degree is greater than a preset opening degree, determines that the driver deeply presses the accelerator to expect the vehicle to accelerate, that is, the vehicle has the need to switch to the four-wheel drive state.

In another example, the vehicle obtains an instruction from the operation information, which is an entry instruction for the four-wheel drive state, and the vehicle has a need to switch to the four-wheel drive state.

In another example, the state of the brake pedal is obtained from the operation information, if the state indicates that the vehicle is in a locked state, the vehicle has a need to switch to the four-wheel drive state.

In another example, if it is determined that there is wheel slip, drive shaft failure, wheel failure, reduced road adhesion coefficient, or road roughness based on the operation information, the vehicle has a need to switch to the four-wheel drive state.

When determining that the vehicle has a need to switch to the four-wheel drive state, the vehicle needs to adjust the speed of the target motor first, that is, control a rotational speed of the target motor to reach a target rotational speed. The target motor is a motor that has not been started in the vehicle in the two-wheel drive state. The vehicle performs a speed ratio conversion on the shaft speed of the shaft where the target motor is located or the rotational speed to obtain the target rotational speed, the target rotational speed can also be a rotational speed of the motor in the second power source assembly. In addition, the target rotational speed can also be converted from the vehicle speed. In addition, the target rotational speed can be a value within a rotational speed range, and the rotational speed range is calculated by the vehicle from the rotational speed ± the rotational speed deviation. Preferably, the value of the rotational speed deviation is less than 50rpm.

Adjusting the rotational speed of the target motor to the target rotational speed is to control the rotational speed of the motor and the rotational speed of the disconnected drive shaft within a certain range, so that the disengagement and combination apparatus can smoothly combine the motor and the drive shaft, which reduces the impact of the gears when the two are combined, thereby reducing collision noise.

Step S103, controlling the target motor to combine with a disengagement and combination apparatus in the vehicle.

Step S104, loading a combined torque that matches acceleration information of the vehicle to the target motor during a process of combining the target motor with the disengagement and combination apparatus.

When the rotational speed of the target motor reaches the target rotational speed, the apparatus controls the target motor to be combined with the disengagement and combination apparatus, so that the target motor is connected to the drive shaft, thereby enabling the target motor to drive the wheel connected to the drive shaft, that is, enabling the vehicle to enter the four-wheel drive state from the two-wheel drive state.

In order to smoothly connect the target motor to the drive shaft, the influence brought by the vehicle acceleration needs to be considered when combining the target motor with the disengagement and combination apparatus. If the vehicle acceleration is large, the speed of the drive shaft will increase during the combining process, and the rotational speed of the drive shaft will cause increase of the rotational speed of the gear of the disengagement and combination apparatus. Therefore, the rotational speed difference between the gear of the target motor and the gear of the disengagement and combination apparatus will also increase, resulting in a significant impact when the motor engages with the gear of the disengagement and combination apparatus.

Regarding this, the vehicle loads a combined torque that matches acceleration information of the vehicle to the target motor during a process of combining the target motor with the disengagement and combination apparatus. The acceleration information is used to indicate the current acceleration of the vehicle, so the combined torque can accelerate the target motor, which enables the rotational speed difference between the gear of the target motor and the gear of the disengagement and combination apparatus to be small, thereby reducing the impact force generated by the engagement between the gear of the target motor and the disengagement and combination apparatus, and reducing noise. The combined torque can be determined through a table stored in the vehicle, which consists of the speed, acceleration information, and combined torque of the vehicle. It should be noted that the vehicle achieves torque loading through controlling the current or voltage of the target motor.

In this embodiment, operation information of a vehicle in a two-wheel drive state is obtained; when it is determined that the vehicle has a need to switch to a four-wheel drive state according to the operation information, a rotational speed of a target motor is controlled to reach a target rotational speed; the target motor is controlled to combine with a disengagement and combination apparatus in the vehicle; and a combined torque that matches acceleration information of the vehicle is loaded to the target motor during a process of combining the target motor with the disengagement and combination apparatus. In the present application, during the process of combining the motor with the disengagement and combination apparatus, the combined torque that matches the acceleration information of the vehicle is loaded to the motor, so that the gear of the motor has a speed that matches the vehicle speed, which reduces a speed difference between the gear of the disengagement and combination apparatus and the gear of the motor, thereby reducing a collision force generated when the gear of the target motor engages with the gear of the disengagement and combination apparatus, and reducing a noise generated when the vehicle enters a four-wheel drive.

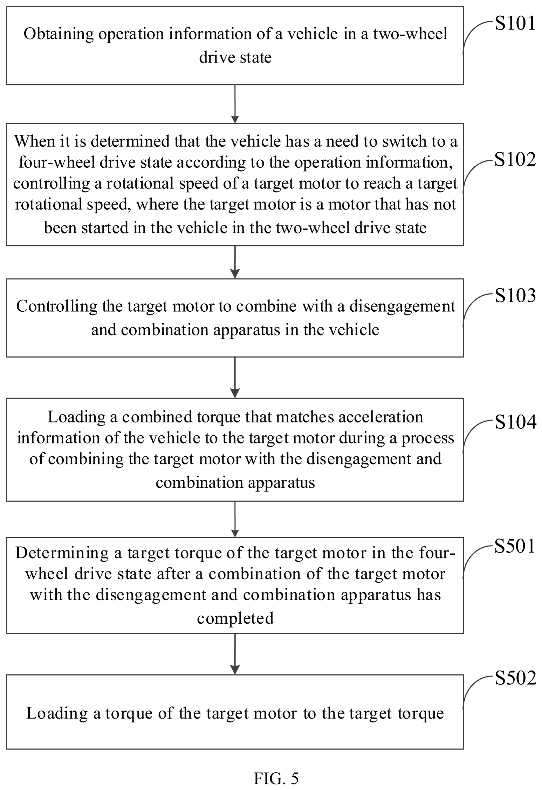

Referring to FIG. 5, FIG. 5 is a second embodiment of a vehicle control method of the present application. Based on the first embodiment, after step S204, the method further includes the following steps.
step S501, determining a target torque of the target motor in the four-wheel drive state after a combination of the target motor with the disengagement and combination apparatus has completed.
step S502, loading a torque of the target motor to the target torque.

In this embodiment, after a combination of the target motor with the disengagement and combination motor has completed, the vehicle needs to allocate the torque to the target motor to make the vehicle travel.

Regarding this, after the combination of the target motor with the disengagement and combination apparatus has completed, the vehicle determines the target torque of the target motor in the four-wheel drive state, and then loads the torque of the target motor to the target torque. In one example, the target torque can be a fixed value.

Furthermore, after the vehicle enters the four-wheel drive state from the two-wheel drive state, the required torque of the vehicle is constant, and a sum of the target torque of the target motor and the torque of the power source is equal to a required torque. Therefore, in the process of loading the torque of the target motor to the target torque, the vehicle needs to control the torque of the power source, so that the sum of the torque of the target motor and the torque of the power source is equal to the required torque.

The required torque is determined by the driver's needs. Specifically, the vehicle obtains a current opening degree of the accelerator pedal, calculates the torque to be determined through a mapping relationship between an opening degree and a torque, as well as the current opening degree of the accelerator pedal, and then corrects the torque to be determined through a correction coefficient associated with the operating driving mode of the vehicle to obtain the required torque, such as a cruise control mode.

In this embodiment, after the combination of the target motor with the disengagement and combination apparatus has completed, the target torque of the target motor in the four-wheel drive state is determined, so as to load the target motor to the target torque and enable the vehicle to travel in the four-wheel drive state.

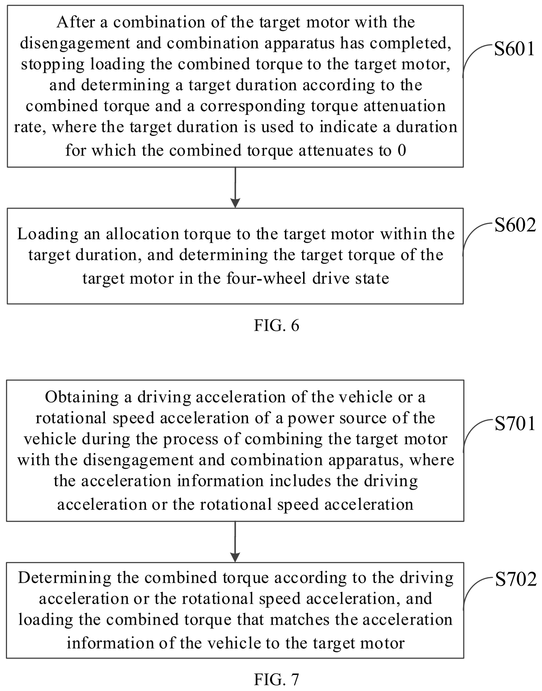

Referring to FIG. 6, FIG. 6 is a third embodiment of a vehicle control method of the present application. Based on the first embodiment, step S501 includes the following steps.

Step S601, after a combination of the target motor with the disengagement and combination apparatus has completed, stopping loading the combined torque to the target motor, and determining a target duration according to the combined torque and a corresponding torque attenuation rate, where the target duration is used to indicate a duration for which the combined torque attenuates to 0.

In this embodiment, the combined torque is loaded to the target motor during the process of combining the target motor with the disengagement and combination apparatus. After a combination of the target motor with the disengagement and combination motor has completed, the vehicle no longer loads the combined torque to the motor, that is, stops loading the combined torque to the target motor, and the combined torque loaded to the target motor will gradually attenuate to 0.

After the combination of the target motor with the disengagement and combination apparatus has completed, the target motor needs a period of time to adapt to the combination with the disengagement and combination apparatus, that is, after a period of time, an engagement state between the gear of the motor and the gear of the disengagement and combination apparatus is adjusted to a better state, so that the target motor can smoothly transit to the target motor loading the target torque. The duration of this period of time is defined as the target duration. After the vehicle stops loading the combined torque to the target motor, the vehicle determines the target duration based on the combined torque and the torque attenuation rate corresponding to the combined torque. The torque attenuation rate can be a fixed value. In addition, the torque attenuation rate can also be a real-time value of the combined torque, that is, the torque attenuation rate is calculated through the combined torque at a previous moment and the combined torque at a current moment. It can be understood that the target duration is used to indicate the duration for which the combined torque attenuates to 0.

Step S602, loading an allocation torque to the target motor within the target duration, and determining the target torque of the target motor in the four-wheel drive state.

A certain rotational speed is needed for the target motor to adapt the disengagement and combination apparatus, therefore, the vehicle loads the allocation torque to the target motor within the target duration.

Furthermore, the rotational speed difference between the gear of the target motor and the gear of the disengagement and combination apparatus needs to be maintained within a certain range, and the combined torque is attenuated. Therefore, the allocation torque loaded to the target motor by the vehicle within the target duration increases with time, so that the torque of the target motor is greater than or equal to the combined torque when a combination of the target motor with the disengagement and combination apparatus has completed. For example, the allocation torque can increase according to a fixed or changing slope.

When a current time point reaches an end time point of the target duration, the vehicle still loads the allocation torque to the target motor until the allocation torque reaches the target torque. During the process of the allocation torque reaching the target torque, the allocation torque still increases according to a fixed or changing slope.

In this embodiment, the vehicle stops loading the combined torque to the target motor, and determines the target duration based on the combined torque and the corresponding torque attenuation rate, so as to load the allocation torque to the target motor within the target duration, so that the gear of the target motor and the gear of the disengagement and combination apparatus are within a certain rotational speed difference, reducing the noise generated by the vehicle.

Referring to FIG. 7, FIG. 7 is a fourth embodiment of a vehicle control method of the present application. Based on any one of the first to third embodiments, step S204 includes the following steps.

Step S701, obtaining a driving acceleration of the vehicle or a rotational speed acceleration of a power source of the vehicle during the process of combining the target motor with the disengagement and combination apparatus, where the acceleration information includes the driving acceleration or the rotational speed acceleration.

In this embodiment, the vehicle may obtain the driving acceleration of the vehicle or the rotational speed acceleration of the power source of the vehicle in real time during the process of combining the target motor with the disengagement and combination apparatus, that is, the acceleration information of the vehicle includes the driving acceleration or the rotational speed acceleration.

Step S702, determining the combined torque according to the driving acceleration or the rotational speed acceleration, and loading the combined torque that matches the acceleration information of the vehicle to the target motor.

The combined torque can be determined through the driving acceleration or the rotational speed acceleration, for example, T₁₂=K*a, where T₁₂ is the combined torque, K is a conversion coefficient, and a is the driving acceleration or the rotational speed acceleration. Of course, a can also be an acceleration of the wheel speed of the power source. Of course, the vehicle can also query the combined torque corresponding to the driving acceleration or the rotational speed acceleration from the table. After the vehicle calculates the combined torque in real time, it immediately loads the combined torque to the target motor. It can be understood that during the process of combining the target motor with the disengagement and combination apparatus, the combined torque loaded to the target motor is determined based on the real-time acceleration information of the vehicle.

In this embodiment, the vehicle accurately determines the combined torque through the driving acceleration or the rotational speed acceleration, so that the rotational speed difference between the gear of the target motor and the gear of the disengagement and combination apparatus is small, thereby achieving a smooth combination of the target motor with the disengagement and combination apparatus.

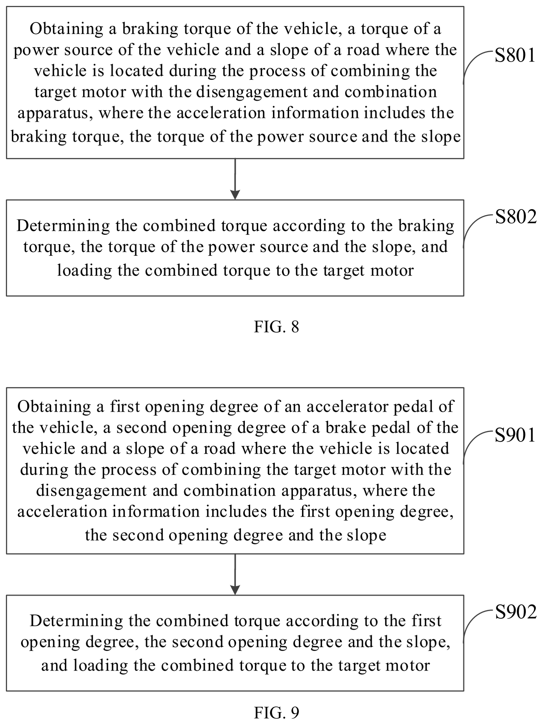

Referring to FIG. 8, FIG. 8 is a fifth embodiment of a vehicle control method of the present application. Based on any one of the first to third embodiments, step S204 includes the following steps.

Step S801, obtaining a braking torque of the vehicle, a torque of a power source of the vehicle and a slope of a road where the vehicle is located during the process of combining the target motor with the disengagement and combination apparatus, where the acceleration information includes the braking torque, the torque of the power source and the slope.

In this embodiment, during the process of combining the target motor with the disengagement and combination apparatus, the vehicle obtains the braking torque of the vehicle, the torque of the power source of the vehicle and the slope of the road where the vehicle is located in real time, that is, the acceleration information includes of the vehicle the braking torque, the torque of the power source and the slope.

Step S802, determining the combined torque according to the braking torque, the torque of the power source and the slope, and loading the combined torque to the target motor.

The combined torque can be determined through the braking torque, the torque of the power source, and the slope. For example, T₁₂=K₁*T_{R}+K₂*T_{B}+K₃*α, where K₁, K₂, and K₃ are conversion coefficients, T_{R} is the torque of the power source, T_{B} is the braking torque, and α is the slope of the road.

Of course, the vehicle can also query the braking torque, the torque of the power source and the combined torque corresponding to the slope from the table. After the vehicle calculates the combined torque in real time, it immediately loads the combined torque to the target motor. It can be understood that during the process of combining the target motor with the disengagement and combination apparatus, the combined torque loaded to the target motor is determined based on the real-time acceleration information of the vehicle.

In this embodiment, the vehicle accurately determines the combined torque through the braking torque, the torque of the power source and the slope, so that the rotational speed difference between the gear of the target motor and the gear of the disengagement and combination apparatus is small, thereby achieving a smooth combination of the target motor with the disengagement and combination apparatus.

Referring to FIG. 9, FIG. 9 is a sixth embodiment of a vehicle control method of the present application. Based on any one of the first to third embodiments, step S204 includes the following steps.

Step S901, obtaining a first opening degree of an accelerator pedal of the vehicle, a second opening degree of a brake pedal of the vehicle and a slope of a road where the vehicle is located during the process of combining the target motor with the disengagement and combination apparatus, where the acceleration information includes the first opening degree, the second opening degree and the slope.

In this embodiment, during the process of combining the target motor with the disengagement and combination apparatus, the vehicle may obtain the first opening degree of the accelerator pedal of the vehicle, the second opening degree of the brake pedal of the vehicle and the slope of the road where the vehicle is located in real time, where the acceleration information of the vehicle includes the first opening degree, the second opening degree and the slope.

Step S902, determining the combined torque according to the first opening degree, the second opening degree and the slope, and loading the combined torque to the target motor.

The combined torque can be determined through the first opening degree, the second opening degree and the slope, for example, T₁₂= K₁*Acc+K₂*Br+K₃*α, where K₁, K₂, and K₃ are conversion coefficients, Acc is the opening degree of the gas pedal (accelerator pedal), Br is the opening degree of the brake pedal, and α is the slope of the road.

Of course, the vehicle can also query the first opening degree, the second opening degree and the combined torque corresponding to the slope from the table. After the vehicle calculates the combined torque in real time, it immediately loads the combined torque to the target motor. It can be understood that during the process of combining the target motor with the disengagement and combination apparatus, the combined torque loaded to the target motor is determined based on the real-time acceleration information of the vehicle.

In this embodiment, the vehicle accurately determines the combined torque through the first opening degree, the second opening degree and the slope, so that the rotational speed difference between the gear of the target motor and the gear of the disengagement and combination apparatus is small, thereby achieving a smooth combination of the target motor with the disengagement and combination apparatus.

Based on the above embodiments, a brief explanation will be given for the vehicle transitioning from the two-wheel drive state to the four-wheel drive state.

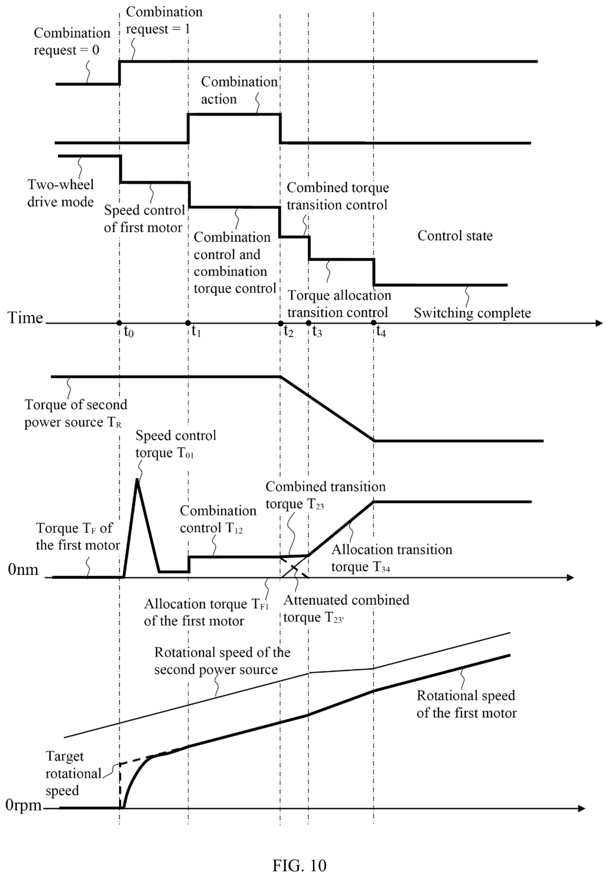

Referring to FIG. 10, the vehicle receives a combination request at moment t0, the combination request is used to indicate the need for the vehicle to enter the four-wheel drive state. The combination request=0 indicates that the vehicle is still in the two-wheel drive state, while the combination request=1 indicates that the vehicle switches to or enters the four-wheel drive state.

At moment t0, the vehicle enters the speed control of the first motor (target motor) from the two-wheel drive state (two-wheel drive state) until the speed of the first motor reaches the target speed, and the moment when the target speed is reached is t1. Within t0-t1, the torque T_{R} of the second power source (the second power source is the power source of the above embodiment) is the driver's required torque, and the torque T_{E} of the first motor is a speed control torque, which is controlled by a motor speed loop. That is, the vehicle is driven by the second power source.

At moment t1, the control state of the vehicle switches to combination control and combination torque control. The combination control refers to combining the first motor with the disengagement and combination apparatus. At moment t2, the combination of the first motor with the disengagement and combination apparatus has completed, that is, the combination action of the first motor with the disengagement device is controlled from moment t1 to t2. The combined torque control refers to loading the combined torque T₁₂ to the first motor within t1 to t2. The torque of the second power source is the driver's required torque within t1 to t2.

At moment t2, the control state of the vehicle switches to combined torque transition control, and at moment t2, the vehicle no longer loads the combined torque to the first motor. Therefore, during the process of the combined torque transition control, the combined torque is attenuated, and it is moment t3 when the combined torque attenuates to 0. At moment t3, the vehicle completes the combined torque transition control. During the process of the combined torque transition control, the vehicle will request the allocation torque T_{F1} to the first motor, and T_{F1} increases with time, that is, T_{F1} increases at a certain slope, so that the combined transition torque T₂₃=T_{F1}+T_{23'}, where T_{23'} is an attenuated combined torque and T₂₃ is a torque of the first motor from moment t2 to t3.

At moment t3, the control state of the vehicle switches to torque allocation transition control. During this stage, the vehicle still loads the allocation torque to the first motor, the loaded allocation torque is T₃₄, and T₃₄ changes at a certain slope with the time until T₃₄ reaches the target torque. It is moment t4 when T₃₄ reaches the target torque, and the torque allocation transition control ends at moment t4, thus the switch from the two-wheel drive to the four-wheel drive is completed. Additionally, T_{F}=T_{F1}=T₃₄, where T_{F} can be expressed as the torque of the first motor.

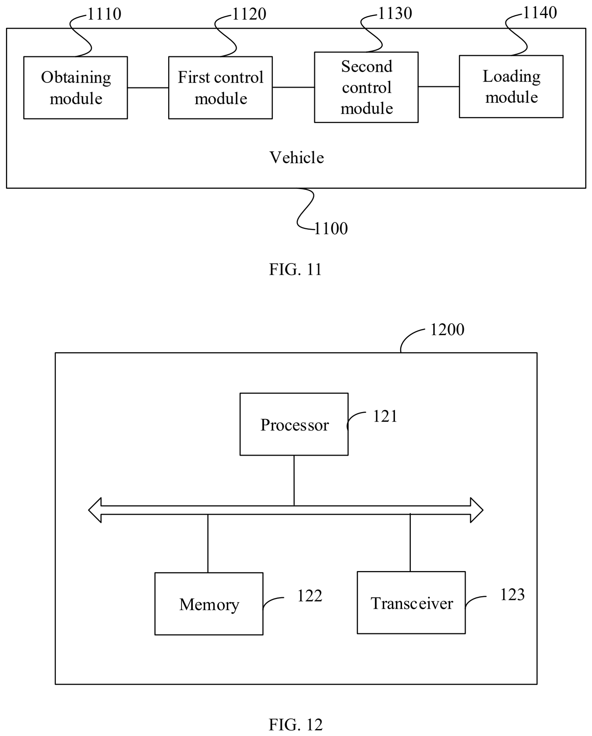

The present application also provides a vehicle, referring to FIG. 11, the vehicle 1100 includes:
an obtaining module 1110, configured to obtain operation information of a vehicle in a two-wheel drive state;
a first control module 1120, configured to, when it is determined that the vehicle has a need to switch to a four-wheel drive state according to the operation information, control a rotational speed of a target motor to reach a target rotational speed, where the target motor is a motor that has not been started in the vehicle in the two-wheel drive state;
a second control module 1130, configured to control the target motor to combine with a disengagement and combination apparatus in the vehicle; and
a loading module 1140, configured to load a combined torque that matches acceleration information of the vehicle to the target motor during a process of combining the target motor with the disengagement and combination apparatus.

In an embodiment, the vehicle 1100 further includes:
a determining module, configured to determine a target torque of the target motor in the four-wheel drive state after a combination of the target motor with the disengagement and combination apparatus has completed;
the loading module 1140 is further configured to load a torque of the target motor to the target torque.

In an embodiment, the determining module includes:
a determining unit, configured to stop loading the combined torque to the target motor, and determine a target duration according to the combined torque and a corresponding torque attenuation rate, where the target duration is used to indicate a duration for which the combined torque attenuates to 0; and
a first loading unit, configured to load an allocation torque to the target motor within the target duration.

In an embodiment, the vehicle 1100 further includes:
a third control module, configured to control a torque of a power source of the vehicle during a process of loading the torque of the target motor to the target torque, so that a sum of the torque of the target motor and the torque of the power source is equal to a total torque required for the vehicle to travel.

In an embodiment, the loading module 1140 includes:
a first obtaining unit, configured to obtain a driving acceleration of the vehicle or a rotational speed acceleration of a power source of the vehicle during the process of combining the target motor with the disengagement and combination apparatus, where the acceleration information includes the driving acceleration or the rotational speed acceleration; and
a second load unit, configured to determine the combined torque according to the driving acceleration or the rotational speed acceleration, and load the combined torque to the target motor.

In an embodiment, the loading module 1140 includes:
a second obtaining unit, configured to obtain a braking torque of the vehicle, a torque of a power source of the vehicle and a slope of a road where the vehicle is located during the process of combining the target motor with the disengagement and combination apparatus, where the acceleration information includes the braking torque, the torque of the power source and the slope; and
a third load unit, configured to determine the combined torque according to the braking torque, the torque of the power source and the slope, and load the combined torque to the target motor.

In an embodiment, the loading module 1140 includes:
a third obtaining unit, configured to obtain a first opening degree of an accelerator pedal of the vehicle, a second opening degree of a brake pedal of the vehicle and a slope of a road where the vehicle is located during the process of combining the target motor with the disengagement and combination apparatus, where the acceleration information includes the first opening degree, the second opening degree and the slope; and
a fourth loading unit, configured to determine the combined torque according to the first opening degree, the second opening degree and the slope, and load the combined torque to the target motor.

FIG. 12 is a hardware structure diagram of a vehicle according to an exemplary embodiment.

The vehicle 1200 may include: a processor 121, such as CPU, a memory 122, and a transceiver 123. Those skilled in the art can understand that the structure shown in FIG. 12 does not constitute a limitation on the vehicle, and may include more or fewer components than shown in the diagram, or combine certain components, or arrange different components. The memory 122 can be implemented by any type of volatile or non-volatile storage device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The processor 121 can call computer programs or computer execution instructions stored in the memory 122 to complete all or part of the steps of the vehicle control method described above.

The transceiver 123 is used to receive information sent by an external device and transmit information to the external device.

An electronic device, including: a processor, and a memory connected in communication with the processor;
where the memory stores computer execution instructions;
the processor executes the computer execution instructions stored in the memory to implement the vehicle control method as described in any one embodiment.

A non-transitory computer-readable storage medium, instructions (computer execution instructions) in the storage medium, when being executed by the processor of the vehicle, enable the vehicle to execute the vehicle control method described above.

A computer program product, including computer programs which, when executed by a processor of a vehicle, enable the vehicle to perform the vehicle control method described above.

After considering the specification and practicing the present invention disclosed herein, those skilled in the art will easily come up with other implementation schemes disclosed herein. The present application aims to cover any variations, uses, or adaptive changes of the present disclosure, which follow the general principles of the present disclosure and include common knowledge or customary technical means in the technical field not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes can be made without departing from its scope. The scope of the present disclosure is limited only by the appended claims.

## Claims

1. A vehicle control method, comprising:
obtaining operation information of a vehicle in a two-wheel drive state;
when it is determined that the vehicle has a need to switch to a four-wheel drive state according to the operation information, controlling a rotational speed of a target motor to reach a target rotational speed, wherein the target motor is a motor that has not been started in the vehicle in the two-wheel drive state;
controlling the target motor to combine with a disengagement and combination apparatus in the vehicle; and
loading a combined torque that matches acceleration information of the vehicle to the target motor during a process of combining the target motor with the disengagement and combination apparatus.

2. The vehicle control method according to claim 1, wherein after the step of loading the combined torque that matches the acceleration information of the vehicle to the target motor during the process of combining the target motor with the disengagement and combination apparatus, the method further comprises:
determining a target torque of the target motor in the four-wheel drive state after a combination of the target motor with the disengagement and combination apparatus has completed; and
loading a torque of the target motor to the target torque.

3. The vehicle control method according to claim 2, wherein before the step of determining the target torque of the target motor in the four-wheel drive state, the method further comprises:
stopping loading the combined torque to the target motor, and determining a target duration according to the combined torque and a corresponding torque attenuation rate, wherein the target duration is used to indicate a duration for which the combined torque attenuates to 0; and
loading an allocation torque to the target motor within the target duration.

4. The vehicle control method according to claim 2, wherein the method further comprises:
during a process of loading the torque of the target motor to the target torque, controlling a torque of a power source of the vehicle, so that a sum of the torque of the target motor and the torque of the power source is equal to a total torque required for the vehicle to travel.

5. The vehicle control method according to any one of claims 1-4, wherein the step of loading the combined torque that matches the acceleration information of the vehicle to the target motor during the process of combining the target motor with the disengagement and combination apparatus comprises:
obtaining a driving acceleration of the vehicle or a rotational speed acceleration of a power source of the vehicle during the process of combining the target motor with the disengagement and combination apparatus, wherein the acceleration information comprises the driving acceleration or the rotational speed acceleration; and
determining the combined torque according to the driving acceleration or the rotational speed acceleration, and loading the combined torque to the target motor.

6. The vehicle control method according to any one of claims 1-4, wherein the step of loading the combined torque that matches the acceleration information of the vehicle to the target motor during the process of combining the target motor with the disengagement and combination apparatus comprises:
obtaining a braking torque of the vehicle, a torque of a power source of the vehicle and a slope of a road where the vehicle is located during the process of combining the target motor with the disengagement and combination apparatus, wherein the acceleration information comprises the braking torque, the torque of the power source and the slope; and
determining the combined torque according to the braking torque, the torque of the power source and the slope, and loading the combined torque to the target motor.

7. The vehicle control method according to any one of claims 1-4, wherein the step of loading the combined torque that matches the acceleration information of the vehicle to the target motor during the process of combining the target motor with the disengagement and combination apparatus comprises:
obtaining a first opening degree of an accelerator pedal of the vehicle, a second opening degree of a brake pedal of the vehicle and a slope of a road where the vehicle is located during the process of combining the target motor with the disengagement and combination apparatus, wherein the acceleration information comprises the first opening degree, the second opening degree and the slope; and
determining the combined torque according to the first opening degree, the second opening degree and the slope, and loading the combined torque to the target motor.

8. A vehicle, comprising:
an obtaining module, configured to obtain operation information of a vehicle in a two-wheel drive state;
a first control module, configured to, when it is determined that the vehicle has a need to switch to a four-wheel drive state according to the operation information, control a rotational speed of a target motor to reach a target rotational speed, wherein the target motor is a motor that has not been started in the vehicle in the two-wheel drive state;
a second control module, configured to control the target motor to combine with a disengagement and combination apparatus in the vehicle; and
a loading module, configured to load a combined torque that matches acceleration information of the vehicle to the target motor during a process of combining the target motor with the disengagement and combination apparatus.

9. A vehicle, comprising: a processor, and a memory connected in communication with the processor;
wherein the memory stores computer execution instructions;
the processor executes the computer execution instructions stored in the memory to implement the method according to any one of claims 1-7.

10. A computer-readable storage medium, wherein the computer-readable storage medium stores computer execution instructions, which, when executed by a processor, are used to implement the method according to any one of claims 1-7.
